# EUROPEAN PATENT SPECIFICATION

(11) **EP 3 042 438 B1**
(45) Date of publication and mention of the grant of the patent: **06.04.2022**
(21) Application number: 14790315.7
(22) Date of filing: 03.09.2014
(51) Int. Cl.: H02K 3/34

(54) **ROTARY ELECTRIC MACHINE AND METHOD OF ASSEMBLING SUCH A ROTARY ELECTRIC MACHINE**
ELEKTRISCHE DREHMASCHINE UND VERFAHREN ZUR MONTAGE SOLCH EINER ELEKTRISCHEN DREHMASCHINE
MACHINE ÉLECTRIQUE ROTATIVE ET PROCÉDÉ DE MONTAGE D'UNE TELLE MACHINE ÉLECTRIQUE ROTATIVE

(30) Priority: 03.09.2013 IT MI20131440
(43) Date of publication of application: 13.07.2016
(73) Proprietor: WINDFIN B.V., 2451 VW Leimuiden (NL)
(72) Inventor: PABST, Otto, I-39037 Rio di Pusteria (IT); SCUOTTO, Mattia, I-39049 Vipiteno (IT)
(74) Representative: Eccetto, Mauro
(86) International application number: PCT/IB2014/064236
(87) International publication number: WO 2015/033284

(56) References cited:
- EP-A1- 2 169 809
- WO-A1-2004/101356
- WO-A1-2005/004309
- WO-A2-2009/081430
- CN-A- 102 364 825
- JP-A- S5 849 058
- JP-A- H05 146 105
- JP-A- H10 174 333
- JP-A- 2005 184 919
- US-A- 5 771 563
- US-A1- 2008 284 555

## Description

### TECHNICAL FIELD

The present invention relates to a rotary electric machine, and a method of assembling such a rotary electric machine.

### BACKGROUND ART

A rotary electric machine normally comprises a stator, in turn comprising a structure made of ferromagnetic material and in which cavities are formed; and one or more conducting packs, each comprising a group of conductors. Each conductor is insulated from the others in the same group. And the group of conductors is insulated with respect to ground. Each cavity is closed over the conducting pack by a protective panel for protecting the conductors and the insulation from impact, pressure, and mechanical abrasion. Each protective panel is mounted inside the structure of ferromagnetic material of the electric machine : more specifically, two opposite ends of the protective panel fit and slide inside two grooves formed in the structure of ferromagnetic material, at the open end of the cavity.

The rotary electric machine also comprises a rotor which, in synchronous electric machines, comprises permanent magnets. Asynchronous electric machines, on the other hand, comprise a structure of ferromagnetic material with cavities similar to those of the stator, and which house one or more conducting packs and, sometimes, the relative protective panels.

Documents WO 2009/081430 A2, WO 2005/004309 A1, JP S58 49058 A, US 2008/284555 A1, JP H05146105 A, JP 2005184919 A, JP H10174333 A disclose conducting packs.

Generally speaking, the configurations described above do not permit optimum filling of the cavity and, hence, optimum efficiency of the rotary electric machine.

### DISCLOSURE OF INVENTION

It is an object of the present invention to provide a rotary electric machine designed to reduce the drawback of the known state of the art.

According to the present invention, there is provided a rotary electric machine for a wind turbine as claimed in claim 1.

In the present invention, the structure of ferromagnetic material has no grooves for supporting the protective panel, seeing as the protective panel forms part of the conducting pack. Thus improving the magnetic flux arrangement, simplifying the structure of ferromagnetic material, and optimizing filling of the cavity.

In another preferred embodiment of the present invention, the protective sheet is made of porous material impregnated with resin.

In another preferred embodiment of the present invention, the protective panel is rigid.

In another preferred embodiment of the present invention, the protective panel is made of porous material, preferably felt or polyester, impregnated with resin.

In another preferred embodiment of the present invention, the protective sheet comprises at least one layer of non-porous material.

In another preferred embodiment of the present invention, the electric machine comprises a stator comprising the structure of ferromagnetic material, the cavity extending inside the structure of ferromagnetic material, and the conducting pack housed inside one of the cavities and contacting the structure of ferromagnetic material.

In another preferred embodiment of the present invention, the electric machine comprises a rotor comprising the structure of ferromagnetic material, the cavity extending inside the structure of ferromagnetic material, and the conducting pack housed inside the cavity and contacting the structure of ferromagnetic material.

Another object of the present invention is to provide a method of assembling a rotary electric machine, designed to reduce the drawback of the known state of the art.

According to the present invention, there is provided a method of assembling a rotary electric machine comprising at least one structure of ferromagnetic material; at least one cavity formed in the structure of ferromagnetic material; and at least one conducting pack having a group of conductors; the method comprising the steps of fixing a protective panel to the group of conductors; enclosing the group of conductors in an insulating case; placing the protective panel along one face of the conducting pack; and enclosing the group of conductors, the insulating case and the protective panel in a protective sheet so that the protective sheet is all around the insulating case and the protective panel is between the insulating case and the protective sheet; wherein the rotary electric machine comprises gaps between the conductors in the group of conductors, between the insulating case and the conductors in the group of conductors; the method comprising the step of impregnating the insulating case and the gaps with resin.

In another preferred embodiment of the present invention, the protective sheet is made of porous material; and the method comprises the step of impregnating the protective sheet with resin.

In another preferred embodiment of the present invention, the protective panel is a rigid element.

In another preferred embodiment of the present invention, the protective panel is made of porous material, preferably felt or polyester; the method comprising the step of impregnating the protective panel with resin.

In another preferred embodiment of the present invention, the protective sheet comprises at least one layer of non-porous material.

### BRIEF DESCRIPTION OF THE DRAWINGS

with resin.

In another preferred embodiment of the present invention, the protective sheet comprises at least one layer of non-porous material.

### BRIEF DESCRIPTION OF THE DRAWINGS

A number of non-limiting embodiments of the present invention will be described by way of example with reference to the attached drawings, in which :
Figure 1 shows a cross section, with parts removed for clarity, of an electric machine in accordance with a first embodiment of the present invention;
Figure 2 shows an enlarged detail of Figure 1;
Figure 3 shows a cross section, with parts removed for clarity, of an electric machine in accordance with a second embodiment of the present invention.

### BEST MODE FOR CARRYING OUT THE INVENTION

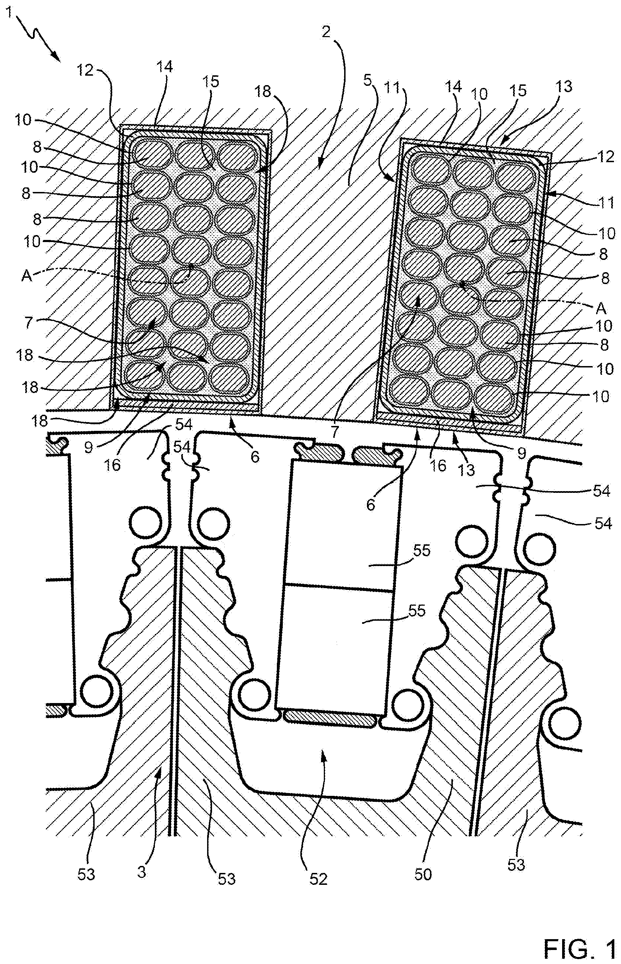

Number 1 in Figure 1 indicates an electric machine.

In the example shown, electric machine 1 may be an electric generator, preferably used in a wind turbine for producing electric power; or an electric motor, preferably used in a cable transportation system.

Electric machine 1 comprises a stator 2; and a hollow rotor 3 which rotates with respect to stator 2. In an alternative embodiment, not shown, of the present invention, rotor 3 is not hollow.

Stator 2 comprises a structure of ferromagnetic material 5; and cavities 6 formed in structure of ferromagnetic material 5. For each cavity 6, electric machine 1 comprises a conducting pack 7 comprising conductors 8 arranged in one or more groups of conductors 9. Conducting pack 7 is housed inside respective cavity 6.

Conducting pack 7 is in the form of a prism which extends along an axis A between two bases. In a preferred embodiment, conducting pack 7 is in the form of a rectangular parallelepiped, and has two pairs of opposite lateral faces 11 and 13 of different sizes, in particular, two large-area lateral faces 11, and two small-area lateral faces 13.

For each conductor 8, conducting pack 7 comprises an insulating sheath 10, which insulates conductor 8 from the other conductors 8 in the same group of conductors 9. In a preferred, non-limiting embodiment, sheath 10 is a polyester and mica strip wound about respective conductor 8.

Conducting pack 7 comprises an insulating case 12 enclosing the group of conductors 9. Insulating case 12 insulates the respective group of conductors 9 from the structure of ferromagnetic material 5 and from ground. Insulating case 12 is defined by a strip wound about the group of conductors 9.

Conducting pack 7 comprises a protective sheet 14 enclosing insulating case 12.

When conducting pack 7 is inside cavity 6, protective sheet 14 contacts the structure of ferromagnetic material 5 on one side, and insulating case 12 on the other side. Inside, conducting pack 7 has gaps 18 between sheaths 10. There are also gaps 18 between sheaths 10 and insulating case 12, and between insulating case 12 and protective sheet 14.

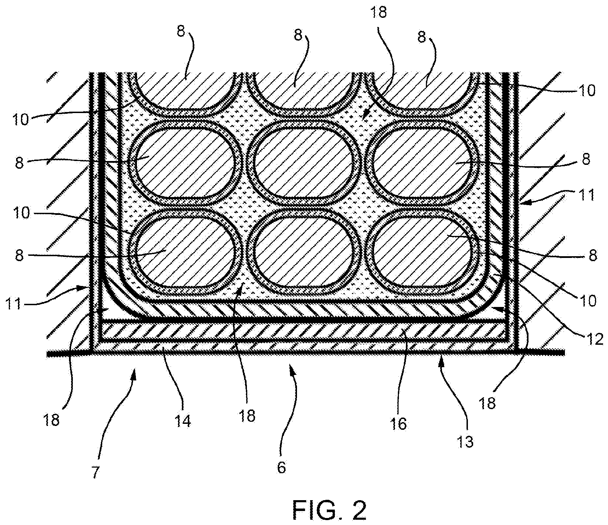

With reference to Figure 2, conducting pack 7 comprises a protective panel 16 between insulating case 12 and protective sheet 14. More specifically, protective panel 16 is located along one of the two lateral faces 13.

Protective sheet 14 protects insulating case 12 mechanically and electrically against damage.

With reference to Figure 1, conducting pack 7 is impregnated with resin 15. More specifically, resin 15 impregnates individual sheath 10 of each conductor 8, insulating case 12, and gaps 18.

Protective sheet 14 comprises porous material, and protective panel 16 comprises a rigid element. Resin 15 impregnates protective sheet 14.

In an alternative version of the present invention, protective panel 16 comprises a panel of porous material. In a preferred embodiment, protective panel 16 comprises a felt or polyester panel impregnated with resin 15; and protective sheet 14 comprises non-porous material.

When conducting pack 7 is inside cavity 6, protective sheet 14 contacts the structure of ferromagnetic material 5 and protects insulating case 12 mechanically.

In a first embodiment, rotor 3 of electric machine 1 comprises rotor segments 52 arranged about an axis of rotation (not shown in the attached drawings).

Each rotor segment 52 comprises a gripper 53, magnetic guides 54, and magnetized modules 55.

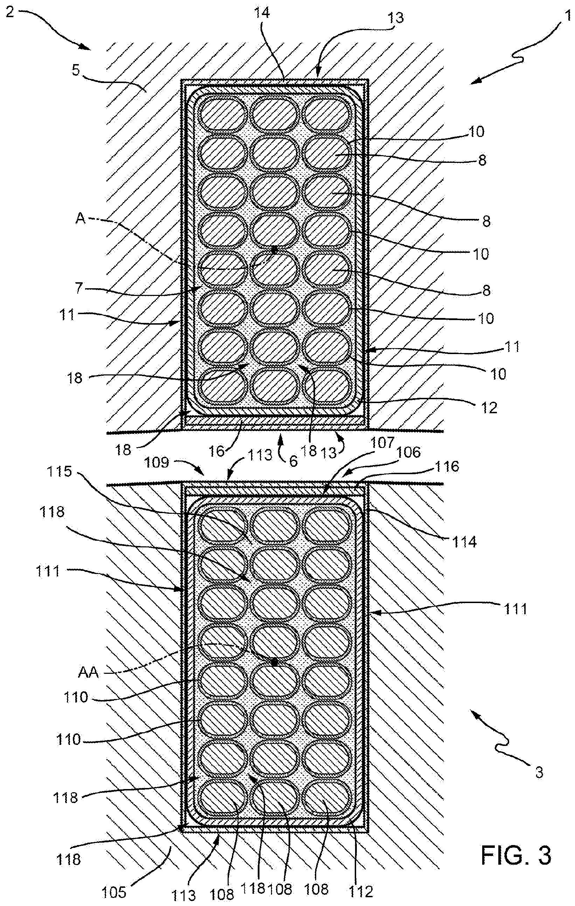

In another preferred embodiment shown in Figure 3, rotor 3 does not comprise grippers 53, magnetic guides 54, and magnetized modules 55. Rotor 3 comprises a structure of ferromagnetic material 105, and cavities 106 formed in structure of ferromagnetic material 105. For each cavity 106, rotor 3 comprises a conducting pack 107 comprising conductors 108 arranged in groups of conductors 109. Conducting pack 107 is housed inside respective cavity 106. Conducting pack 107 of rotor 3 is the same as conducting pack 7 of stator 2.

Conducting pack 107 is in the form of a prism which extends along an axis AA between two bases. In a preferred embodiment, conducting pack 107 is in the form of a rectangular parallelepiped, and has two pairs of opposite lateral faces 111 and 113 of different sizes, in particular, two large-area lateral faces 111, and two small-area lateral faces 113.

For each conductor 108, conducting pack 107 comprises a individual sheath 110, which insulates conductor 108 from the other conductors 108 in the same group of conductors 109. In a preferred, non-limiting embodiment, individual sheath 110 is a polyester and mica strip wound about respective conductor 108.

Conducting pack 107 comprises an insulating case 112 for the group of conductors 109. When inside cavity 106, insulating case 112 insulates the respective group of conductors 109 from the structure of ferromagnetic material 105 and from ground.

Conducting pack 107 comprises a protective sheet 114 enclosing insulating case 112.

When conducting pack 107 is inside cavity 106, protective sheet 114 contacts the structure of ferromagnetic material 105 on one side, and insulating case 112 on the other side. Conducting pack 107 has gaps 118 between sheaths 110. There are also gaps 118 between sheaths 110 and insulating case 112, and between insulating case 112 and protective sheet 114.

Conducting pack 107 comprises a protective panel 116 between individual sheath 110 and protective sheet 114. More specifically, protective panel 116 is located along one of the two small-area lateral faces 113.

Protective sheet 114 protects insulating case 112 mechanically against damage.

Conducting pack 107 is impregnated with resin 115. More specifically, resin 115 impregnates individual sheath 110 of each conductor 108, insulating case 112, and gaps 118.

Protective sheet 114 comprises porous material, and protective panel 116 comprises a rigid element. Resin 115 impregnates protective sheet 114.

In an alternative version of the present invention, protective panel 116 is defined by a felt or a panel preferably polyester panel impregnated with resin 115; and protective sheet 114 comprises non-porous material.

When conducting pack 107 is inside cavity 106, protective sheet 114 contacts the structure of ferromagnetic material 105 and protects insulating case 112 mechanically.

In the present invention, the group of conductors 9 inside cavity 6 is smaller, which means the number of conductors 8 in each group of conductors 9 may be increased, or the size of cavity 6 reduced as compared with the known art, thus improving electromagnetic field distribution. Moreover, in the present invention, in the structure of ferromagnetic material 5 the indentation is not formed as in the known art, thus improving magnetic field distribution as compared with the known art.

In the present invention, the group of conductors 109 inside cavity 106 is smaller, which means the number of conductors 108 in each group of conductors 109 may be increased, or the size of cavity 106 reduced as compared with the known art, thus improving electromagnetic field distribution. Moreover, in the present invention, the cavity is not formed in the structure of ferromagnetic material 105 in the same way as in the known art, thus improving magnetic field distribution as compared with the known art.

Electric machine 1 is also easier to produce with respect to the known art.

Clearly, the present invention also covers embodiments not described in the above detailed description, as well as equivalent embodiments within the protective scope of the attached Claims.

## Claims

1. A rotary electric machine for a wind turbine, the rotary electric machine (1) comprising at least one structure of ferromagnetic material (5; 105); at least one cavity (6; 106) extending inside the structure of ferromagnetic material (5; 105); and at least one conducting pack (7; 107) designed to be housed inside the cavity (6; 106) and in turn comprising a group of conductors (9; 109), and a protective panel (16; 116) fixed to the group of conductors (9; 109); wherein the conducting pack (7; 107) is entirely impregnated with resin (15; 115); the conducting pack (7; 107) comprises an insulating case (12; 112) around the group of conductors (9; 109); wherein the conducting pack (7; 107) comprises a protective sheet (14; 114) all around the insulating case (12; 112); and wherein the protective panel (16; 116) is located between the insulating case (12; 112) and the protective sheet (14; 114); and having gaps (18; 118) between the conductors in the group of conductors (9; 109), and between the insulating case (12; 112) and the conductors in the group of conductors (9; 109); and wherein the insulating case (12; 112) and the gaps (18; 118) are impregnated with resin (15; 115).

2. A rotary electric machine as claimed in Claim 1, wherein the protective sheet (14; 114) is made of porous material impregnated with resin (15; 115).

3. A rotary electric machine as claimed in Claim 2, wherein the protective panel (16; 116) is rigid.

4. A rotary electric machine as claimed in Claim 1, wherein the protective panel (16; 116) is made of porous material, preferably felt or polyester, impregnated with resin (15; 115).

5. A rotary electric machine as claimed in Claim 4, wherein the protective sheet (14; 114) comprises at least one layer of non-porous material.

6. A rotary electric machine as claimed in any one of the foregoing Claims, and comprising a stator comprising the structure of ferromagnetic material (5), the cavity (6) extending inside the structure of ferromagnetic material (5), and the conducting pack (7) housed inside one of the cavities (6) and contacting the structure of ferromagnetic material (5).

7. A rotary electric machine as claimed in any one of the foregoing Claims, and comprising a rotor comprising the structure of ferromagnetic material (105), the cavity (106) extending inside the structure of ferromagnetic material (105), and the conducting pack (107) housed inside the cavity (106) and contacting the structure of ferromagnetic material (105).

8. A method of assembling a rotary electric machine comprising at least one structure of ferromagnetic material (5; 105); at least one cavity (6; 106) formed in the structure of ferromagnetic material (5; 105); and at least one conducting pack (7; 107) having a group of conductors (9; 109); the method comprising the steps of fixing a protective panel (16; 116) to the group of conductors (9; 109); enclosing the group of conductors (9; 109) in an insulating case (12; 112); placing the protective panel (16; 116) along one face (13; 113) of the conducting pack (7; 107); and enclosing the group of conductors (9; 109), the insulating case (12; 112) and the protective panel (16; 116) in a protective sheet (14; 114) so that the protective sheet (14; 114) is all around the insulating case (12; 112) and the protective panel (16; 116) is between the insulating case (12; 112) and the protective sheet (14; 114); wherein the rotary electric machine (1) comprises gaps (18; 118) between the conductors in the group of conductors (9; 109), and between the insulating case (12; 112) and the conductors in the group of conductors (9; 109); the method comprising the step of impregnating the insulating case (12; 112) and the gaps (18; 118) with resin (15; 115).

9. A method as claimed in Claim 8, wherein the protective sheet (14; 114) is made of porous material; the method comprising the step of impregnating the protective sheet (14; 114) with resin (15; 115).

10. A method as claimed in Claim 9, wherein the protective panel (16; 116) comprises a rigid element.

11. A method as claimed in Claim 10, wherein the protective panel (16; 116) is made of porous material, preferably felt or polyester; the method comprising the step of impregnating the protective panel (16; 116) with resin (15; 115).

12. A method as claimed in Claim 11, wherein the protective sheet (14; 114) comprises at least one layer of non-porous material.

## Patentansprüche

1. Rotierende elektrische Maschine bzw. elektrische Rotationsmaschine für eine Windturbine bzw. Windkraftanlage, wobei die rotierende elektrische Maschine (1) umfasst: zumindest eine Struktur aus ferromagnetischem Material (5; 105); zumindest einen Hohlraum (6; 106), der sich innerhalb der Struktur aus ferromagnetischem Material (5; 105) erstreckt; und zumindest ein leitendes Pack bzw. Leitungspack (7; 107), das dazu ausgelegt ist, innerhalb des Hohlraums (6; 106) untergebracht zu sein, und das wiederum eine Gruppe von Leitern (9; 109) und eine an der Gruppe von Leitern (9; 109) befestigte Schutzplatte (16; 116) umfasst; wobei das leitende Pack (7; 107) vollständig mit Harz (15; 115) imprägniert ist; das leitende Paket (7; 107) ein isolierendes Gehäuse (12; 112) um die Gruppe von Leitern (9; 109) herum umfasst; wobei das leitende Pack (7; 107) eine Schutzfolie (14; 114) rund um das isolierende Gehäuse (12; 112) umfasst; und wobei sich die Schutzplatte (16; 116) zwischen dem isolierenden Gehäuse (12; 112) und der Schutzfolie (14; 114) befindet; und Spalte (18; 118) zwischen den Leitern in der Gruppe von Leitern (9; 109) und zwischen dem isolierenden Gehäuse (12; 112) und den Leitern in der Gruppe von Leitern (9; 109) aufweist; und wobei das isolierende Gehäuse (12; 112) und die Spalte (18; 118) mit Harz (15; 115) imprägniert sind.

2. Rotierende elektrische Maschine nach Anspruch 1, wobei die Schutzfolie (14; 114) aus porösem Material besteht, das mit Harz (15; 115) imprägniert ist.

3. Rotierende elektrische Maschine nach Anspruch 2, wobei die Schutzplatte (16; 116) starr ist.

4. Rotierende elektrische Maschine nach Anspruch 1, wobei die Schutzplatte (16; 116) aus porösem Material, vorzugsweise Filz oder Polyester, imprägniert mit Harz (15; 115) besteht.

5. Rotierende elektrische Maschine nach Anspruch 4, wobei die Schutzfolie (14; 114) zumindest eine Schicht aus nicht porösem Material umfasst.

6. Rotierende elektrische Maschine nach einem der vorhergehenden Ansprüche, und umfassend einen Stator mit der Struktur aus ferromagnetischem Material (5), wobei sich der Hohlraum (6) innerhalb der Struktur aus ferromagnetischem Material (5) erstreckt und das leitende Pack (7) innerhalb eines der Hohlräume (6) untergebracht ist und die Struktur aus ferromagnetischem Material (5) kontaktiert bzw. berührt.

7. Rotierende elektrische Maschine nach einem der vorhergehenden Ansprüche, umfassend einen Rotor mit der Struktur aus ferromagnetischem Material (105), wobei sich der Hohlraum (106) innerhalb der Struktur aus ferromagnetischem Material (105) erstreckt und das leitende Pack (107) innerhalb des Hohlraums (106) untergebracht ist und die Struktur aus ferromagnetischem Material (105) kontaktiert bzw. berührt.

8. Verfahren zum Montieren einer rotierenden elektrischen Maschine bzw. elektrischen Rotationsmaschine, umfassend zumindest eine Struktur aus ferromagnetischem Material (5; 105); zumindest einen Hohlraum (6; 106), der in der Struktur aus ferromagnetischem Material (5; 105) ausgebildet ist; und zumindest ein leitendes Pack bzw. Leitungspack (7; 107) mit einer Gruppe von Leitern (9; 109); wobei das Verfahren die Schritte umfasst: Befestigen einer Schutzplatte (16; 116) an der Gruppe von Leitern (9; 109); Einschließen der Gruppe von Leitern (9; 109) in einem isolierenden Gehäuse (12; 112); Platzieren der Schutzplatte (16; 116) entlang einer Fläche bzw. Seite (13; 113) des leitenden Packs (7; 107); und Einschließen der Gruppe von Leitern (9; 109), des isolierenden Gehäuses (12; 112) und der Schutzplatte (16; 116) in eine Schutzfolie (14; 114), so dass sich die Schutzfolie (14; 114) um das ganze isolierende Gehäuse (12; 112) herum befindet und die Schutzplatte (16; 116) sich zwischen dem isolierenden Gehäuse (12; 112) und der Schutzfolie (14; 114) befindet; wobei die rotierende elektrische Maschine (1) Spalte (18; 118) zwischen den Leitern in der Gruppe von Leitern (9; 109) und zwischen dem isolierenden Gehäuse (12; 112) und den Leitern in der Gruppe von Leitern (9; 109) umfasst; wobei das Verfahren den Schritt des Imprägnierens des isolierenden Gehäuses (12; 112) und der Spalte (18; 118) mit Harz (15; 115) umfasst.

9. Verfahren nach Anspruch 8, wobei die Schutzfolie (14; 114) aus porösem Material besteht; wobei das Verfahren den Schritt des Imprägnierens der Schutzfolie (14; 114) mit Harz (15; 115) umfasst.

10. Verfahren nach Anspruch 9, wobei die Schutzplatte (16; 116) ein starres Element umfasst.

11. Verfahren nach Anspruch 10, wobei die Schutzplatte (16; 116) aus porösem Material, vorzugsweise Filz oder Polyester, besteht; wobei das Verfahren den Schritt des Imprägnierens der Schutzplatte (16; 116) mit Harz (15; 115) umfasst.

12. Verfahren nach Anspruch 11, wobei die Schutzfolie (14; 114) zumindest eine Schicht aus nicht porösem Material umfasst.

## Revendications

1. Machine électrique rotative pour éolienne, la machine électrique rotative (1) comprenant au moins une structure en matériau ferromagnétique (5 ; 105) ; au moins une cavité (6 ; 106) s'étendant à l'intérieur de la structure en matériau ferromagnétique (5 ; 105) ; et au moins un ensemble conducteur (7 ; 107) conçu pour être logé dans la cavité (6 ; 106) et comprenant à son tour un groupe de conducteurs (9 ; 109), et un panneau protecteur (16; 116) fixé au groupe de conducteurs (9 ; 109) ; dans lequel l'ensemble conducteur (7 ; 107) est entièrement imprégné de résine (15 ; 115) ; l'ensemble conducteur (7 ; 107) comprend un boîtier isolant (12 ; 112) autour du groupe de conducteurs (9 ; 109) ; dans lequel l'ensemble conducteur (7 ; 107) comprend une feuille de protection (14 ; 114) tout autour du boîtier isolant (12 ; 112) ; et dans lequel le panneau protecteur (16; 116) se trouve entre le boîtier isolant (12 ; 112) et la feuille de protection (14 ; 114) ; et présentant des espaces (18 ; 118) entre les conducteurs du groupe de conducteurs (9 ; 109) et entre le boîtier isolant (12 ; 112) et les conducteurs du groupe de conducteurs (9 ; 109) ; et dans lequel le boîtier isolant (12 ; 112) et les espaces (18 ; 118) sont imprégnés de résine (15 ; 115).

2. Machine électrique rotative selon la revendication 1, dans laquelle la feuille de protection (14 ; 114) est réalisée de matériau poreux imprégné de résine (15 ; 115).

3. Machine électrique rotative selon la revendication 2, dans laquelle le panneau protecteur (16 ; 116) est rigide.

4. Machine électrique rotative selon la revendication 1, dans laquelle le panneau protecteur (16 ; 116) est fait de matériau poreux, de préférence de feutre ou de polyester, imprégné de résine (15 ; 115).

5. Machine électrique rotative selon la revendication 4, dans laquelle la feuille de protection (14 ; 114) comprend au moins une couche de matériau non poreux.

6. Machine électrique rotative selon l'une quelconque des revendications précédentes, et comprenant un stator comprenant la structure en matériau ferromagnétique (5), la cavité (6) s'étendant à l'intérieur de la structure en matériau ferromagnétique (5), et l'ensemble conducteur (7) logé dans l'une des cavités (6) et contactant la structure en matériau ferromagnétique (5).

7. Machine électrique rotative selon l'une quelconque des revendications précédentes, et comprenant un rotor comprenant la structure en matériau ferromagnétique (105), la cavité (106) s'étendant à l'intérieur de la structure en matériau ferromagnétique (105), et l'ensemble conducteur (107) logé dans la cavité (106) et contactant la structure en matériau ferromagnétique (105).

8. Procédé d'assemblage d'une machine électrique rotative comprenant au moins une structure en matériau ferromagnétique (5 ; 105) ; au moins une cavité (6 ; 106) formée dans la structure en matériau ferromagnétique (5 ; 105) ; et au moins un ensemble conducteur (7; 107) comprenant un groupe de conducteurs (9 ; 109) ; le procédé comprenant les étapes consistant à fixer un panneau protecteur (16 ; 116) sur le groupe de conducteurs (9 ; 109) ; enfermer le groupe de conducteurs (9 ; 109) dans un boîtier isolant (12 ; 112) ; placer le panneau protecteur (16 ; 116) le long d'une face (13 ; 113) de l'ensemble conducteur (7 ; 107) ; et enfermer le groupe de conducteurs (9; 109), le boîtier isolant (12 ; 112) et le panneau protecteur (16 ; 116) dans une feuille de protection (14 ; 114) de manière à ce que la feuille de protection (14 ; 114) soit tout autour du boîtier isolant (12 ; 112) et le panneau protecteur (16 ; 116) se trouve entre le boîtier isolant (12 ; 112) et la feuille de protection (14 ; 114) ; dans lequel la machine électrique rotative (1) comprend des espaces (18 ; 118) entre les conducteurs du groupe de conducteurs (9 ; 109) et entre le boîtier isolant (12 ; 112) et les conducteurs du groupe de conducteurs (9 ; 109) ; le procédé comprenant l'étape consistant à imprégner le boîtier isolant (12 ; 112) et les espaces (18 ; 118) de résine (15 ; 115).

9. Procédé selon la revendication 8, dans lequel la feuille de protection (14 ; 114) est constituée de matériau poreux ; ce procédé comprenant l'étape consistant à imprégner la feuille de protection (14 ; 114) de résine (15 ; 115).

10. Procédé selon la revendication 9, dans lequel le panneau protecteur (16 ; 116) comprend un élément rigide.

11. Procédé selon la revendication 10, dans lequel le panneau protecteur (16 ; 116) est fait de matériau poreux, de préférence de feutre ou de polyester ; le procédé comprenant l'étape consistant à imprégner le panneau protecteur (16 ; 116) de résine (15 ; 115).

12. Procédé selon la revendication 11, dans lequel la feuille de protection (14 ; 114) comprend au moins une couche de matériau non poreux.
